# EUROPÄISCHE PATENTSCHRIFT

(11) **EP 2 432 989 B1**
(45) Veröffentlichungstag und Bekanntmachung des Hinweises auf die Patenterteilung: **03.07.2013**
(21) Anmeldenummer: 10763310.9
(22) Anmeldetag: 15.09.2010
(51) Int. Cl.: F03B 17/06

(54) **GEZEITENKRAFTWERK UND VERFAHREN FÜR DESSEN ERSTELLUNG**
TIDAL POWER PLANT AND METHOD FOR THE CONSTRUCTION THEREOF
CENTRALE MARÉMOTRICE ET SON PROCÉDÉ DE FABRICATION

(30) Priorität: 20.11.2009 DE 102009053879
(43) Veröffentlichungstag der Anmeldung: 28.03.2012
(73) Patentinhaber: Voith Patent GmbH, 89522 Heidenheim (DE)
(72) Erfinder: PERNER, Norman, 89233 Neu-Ulm (DE); MAIER, Wolfgang, 89564 Nattheim (DE); SAUER, Alexander, 89522 Heidenheim (DE); HOLSTEIN, Benjamin, 89518 Heidenheim (DE)
(74) Vertreter: Weitzel, Wolfgang
(86) Internationale Anmeldenummer: PCT/EP2010/005656
(87) Internationale Veröffentlichungsnummer: WO 2011/060845

(56) Entgegenhaltungen:
- WO-A2-03/025385
- DE-A1- 10 346 166
- DE-A1-102008 023 050
- US-A1- 2005 005 592

## Beschreibung

Die Erfindung betrifft ein Gezeitenkraftwerk mit den oberbegrifflichen Merkmalen von Anspruch 1 sowie ein Verfahren für dessen Erstellung.

Gezeitenkraftwerke, die als freistehende Einheiten einem Fließgewässer oder einem Gezeitenstrom kinetische Energie entnehmen, sind bekannt. Eine mögliche Bauform sieht eine propellerförmig angelegte Wasserturbine mit horizontaler Drehachse vor, die an einer Maschinengondel umläuft. Denkbar ist eine Tragstruktur für die Wasserturbine, die radial außen an einem tonnenförmigen Gondelgehäuse gelagert wird. Alternativ schließt sich an die Wasserturbine eine Turbinenwelle an, sodass die zugeordneten Lager im Inneren des Gondelgehäuses aufgenommen werden können. Üblicherweise werden axial beabstandete Radiallager und eine hiervon getrennte Anordnung eines Axiallagers verwendet, das für eine beidseitige Anströmung der Wasserturbine angelegt ist. Dabei kann eine Lagerung zu beiden Seiten einer Spurscheibe an der Turbinenwelle vorgesehen sein.

Das tragende Gondelgehäuse eines gattungsgemäßen Gezeitenkraftwerks nimmt zusätzlich zu den von den Lagern der umlaufenden Einheit eingetragenen Kräften die Kraftwirkung eines von der Wasserturbine angetriebenen elektrischen Generators auf. Dabei erfolgt eine Abstützung der Maschinengondel gegen eine zum Gewässergrund reichende Stützstruktur.

Die bisher projektierten Gondelgehäuse sind mehrteilige ausgebildet und sehen eine Stapelfolge miteinander verschraubter Stahlringsegmente vor. Aufgrund der typischerweise großen Baugröße entstehen hohe Material- und Fertigungskosten, sodass zur Herstellung einer Vielzahl baugleicher Anlagen Materialalternativen in Betracht gezogen werden. Für einen Anlagentyp mit einer umhüllten Wasserturbine werden durch die WO 03/025385 A2 als Materialien zur Ausbildung eines äußeren Strömungsgehäuses, das als Venturi-Düse wirkt, neben Stahl Faserverbundwerkstoffe und seewasserfester Beton vorgeschlagen. Dabei dient das äußere Strömungsgehäuse neben der Strömungsführung zusätzlich der Aufnahme von Generatorkomponenten, die radial außen an der Wasserturbine angeordnet sind. Die präzise auszuführende Lageranordnung der Wasserturbine ist jedoch nicht im äußeren Strömungsgehäuse angelegt. Stattdessen stützt sich die Wasserturbine über ein Turbinenwellenlager an einem Zentralelement innerhalb des Strömungskanals ab.

Ferner geht aus der EP 2 108 817 A2 eine aus Beton gefertigte Gehäusehülle einer Maschinengondel für eine Windkraftanlage hervor. Dabei wird die Wandungstärke für die Gehäusehülle aus Beton dünnwandig im Bereich von 1 cm bis 10 cm gewählt, da die Lasteinleitung vom Windrotor und dem nachfolgenden Antriebsstrang sowie die Kraftwirkung des elektrischen Generators von einem separaten Tragrahmen aufgenommen wird, der sich direkt gegen den Turm der Windkraftanlage abstützt. Folglich werden die Kräfte an der Turbinenwelle nicht über das Betongehäuse abgeleitet und diesem stattdessen eine Schallschutzfunktion zugeordnet.

Der Erfindung liegt die Aufgabe zugrunde, ein Gezeitenkraftwerk für die Serienfertigung geeignet zu gestalten. Dabei sollte eine in einer Seewasserumgebung dauerhaft korrosionsbeständige Anlage resultieren, deren Erstellung konstruktiv und fertigungstechnisch vereinfacht ist.

Die der Erfindung zugrunde liegende Aufgabe wird durch die Merkmale der unabhängigen Ansprüche gelöst. Vorteilhafte Ausgestaltungen ergeben sich aus den Unteransprüchen.

Für ein erfindungsgemäßes Gezeitenkraftwerk wird das Gondelgehäuse einer Maschinengondel als lasttragendes Betonteil ausgebildet. Die umlaufende Einheit mit der Wasserturbine stützt sich mittels einer Gleitlageranordnung, die eine Vielzahl von Lagerelementen umfasst, am betonierten Gondelgehäuse ab, wobei die Lagerelemente justierbar direkt am Betonteil oder an in das Betonteil eingegossenen Lagerträgern befestigt sind.

Das Betonteil für das Gondelgehäuse kann in weiten Bereichen ohne besondere Anforderung an die Formgenauigkeit ausgeführt sein. Erfindungsgemäß sind lediglich die Wirkbereiche für die Lageranordnung der umlaufenden Einheit konturpräzise angelegt. Hierzu wird zunächst das Betonteil des Gondelgehäuses gefertigt. Dies kann einteilig, insbesondere in Monocoquebauweise, ausgebildet sein oder es besteht aus mehreren, gegeneinander verspannten Betonsegmenten. Nachfolgend werden die Lagerabstützungspunkte für die Gleitlageranordnung am Betonteil und/oder an in das Betonteil eingegossenen Lagerträgern bezüglich ihrer Relativlage vermessen. Für eine vorteilhafte Ausgestaltung erfolgt in einem optionalen Zwischenschritt eine anlagenspezifische Nachbearbeitung des Gondelgehäuses im Bereich der Lagerabstützungspunkte direkt am Betonteil und/oder an den eingegossenen Lagerträgern, gefolgt von einer erneuten Vermessung. Danach werden die justierbaren Lagerelemente an den Lagerabstützungspunkten befestigt und auf der Grundlage der Messdaten des jeweiligen Betonteils eingerichtet.

Demnach liegt eine dreistufige Gliederung der Formgenauigkeits-Anforderung für das Gondelgehäuses vor, wobei die Grundkontur des Betonteils als erste Stufe vergleichsweise ungenau hergestellt werden kann. Dabei können sich insbesondere beim Zusammenfügen und Verspannen von Betonsegmenten Formabweichungen ergeben. Diese sind lediglich an den Wirkflächen relevant. Für die Gleitlageranordung der umlaufende Einheit werden daher die Abstützungspunkte am Gondelgehäuse für die einzelnen Lagersegmente wenigstens lagebestimmt und vorzugsweise anlagenspezifisch nachbearbeitet, sodass in diesen Bereichen eine mittlere Formgenauigkeit erreicht wird. Damit ist die Feinjustage mittels der justierbaren Lagerelemente an den separaten Abstützungspunkten am Gondelgehäuse, die die dritte Stufe der Formgenauigkeit bildet, möglich.

Zur Herstellung des Betonteils wird seewasserfester Beton verwendet und je nach Ausgestaltung des Gondelgehäuses die Konstruktion als armiertes Spannbetonteil, als Verbund mehrerer Betonsegmente mit Spanngliedern oder in Monocoquebauweise ausgeführt. Dabei kann ein faserverstärkter Beton eingesetzt werden und die Betonteile können eine abdichtende Korrosionschutzbeschichtung aufweisen. Ferner sind die Zugelemente, um das Betonteil unter Vorspannung zu setzen, für den Einsatz in der Seewasserumgebung gegen Korrosion geschützt. Alternativ oder zusätzlich können innenliegende Durchgangskanäle im Betonteil vorgesehen sein, die so abgedichtet oder nach dem Verspannen vergossen sind, dass darin aufgenommene Zugelemente trocken liegen.

Für eine Weitergestaltung der Erfindung ist zusätzlich die Turbinenwelle als Betonteil ausgebildet. Für eine bevorzugte Ausgestaltung werden die Gleitlagerflächen bildenden Lagerkomponenten der Turbinenwelle mittels eines Stahlskeletts miteinander verbunden, das einen Teil der Armierung des Betonteils bildet. Die solchermaßen lagefixierten Lagerkomponenten werden dann in eine Schalung eingebracht und mit Beton umgossen. Entsprechend wird die Bewehrung im Beton vor Korrosion geschützt. Außerdem werden für eine bevorzugte Ausgestaltung faserförmige Zuschlagstoffe dem Beton zugegeben, die von sich aus korrosionsbeständig sind.

Ferner wird eine Ausführung des Betonteils für die Turbinenwelle bevorzugt, die zu einer gewählten Einstellung der Auftriebskraft und des Auftriebspunkts relativ zum Schwerpunkt der umlaufenden Einheit führt, um die Gleitlageranordnung zu entlasten. Dabei ist die Turbinenwelle insbesondere schwimmfähig ausgebildet, sodass eine Abdichtung des Betonteils vorgesehen sein muss, die das Eindringen von Wasser in Hohlräume oder mit schwimmfähigem Material verfüllte Bereiche im Betonteil verhindert.

Besonders bevorzugt ist eine Ausgestaltung für das Betonteil der Turbinenwelle, für die nach der Erstellung an den Schnittstellen zu den angrenzenden Komponenten des Antriebsstrangs eine Vermessung vorgenommen wird. Hierauf aufbauend können ein turbinenseitiges Anschlussstück und/oder ein generatorseitiges Anschlussstück, an die jeweilige Turbinenwelle anlagenspezifisch angepasst werden. Alternativ werden die Anschlussflächen an der betonierten Turbinenwelle nachgearbeitet.

Vorteilhafterweise umfasst ein erfindungsgemäßes Gezeitenkraftwerk mehrere Betonsegmente, die gegeneinander verspannt sind. Dadurch kann jedes einzelne der Betonsegmente für sich bearbeitet werden. Außerdem können die Betonsegmente so angelegt sein, dass im montierten Zustand eine koaxiale Anordnung vorliegt, die eine innenliegende Ringnut zur Kammerung einer Spurscheibe an der Turbinenwelle bildet. Für eine alternative Ausgestaltung wird die Ringnut durch ein oder mehrere Begrenzungselemente gebildet, die an der Innenwandung am betonierten Gondelgehäuse oder an im Beton eingegossenen Trägern befestigt sind.

Nachfolgend wird die Erfindung anhand von Ausführungsbeispielen und in Verbindung mit Figurendarstellungen genauer erläutert, die im Einzelnen Folgendes darstellen:
- Figur 1: zeigt ein erfindungsgemäßes Gezeitenkraftwerk mit einem betonierten Gondelgehäuse in teilgeschnittener Seitenansicht.
- Figuren 2a - 2d: zeigen die Montage eines erfindungsgemäßen Gondelgehäuses, das als Betonteil mit mehreren Betonsegmenten ausgebildet ist, im Axialschnitt.
- Figur 3: zeigt Teile einer Turbinenwelle für eine Weitergestaltung der Erfindung im Zustand vor dem Umgießen mit Beton in perspektivischer Ansicht, wobei Gleitflächenkomponenten über ein Stahlskelett verbundenen sind.
- Figur 4: zeigt eine alternative Ausgestaltung eines erfindungsgemäßen betonierten Gondelgehäuses im Axialschnitt.

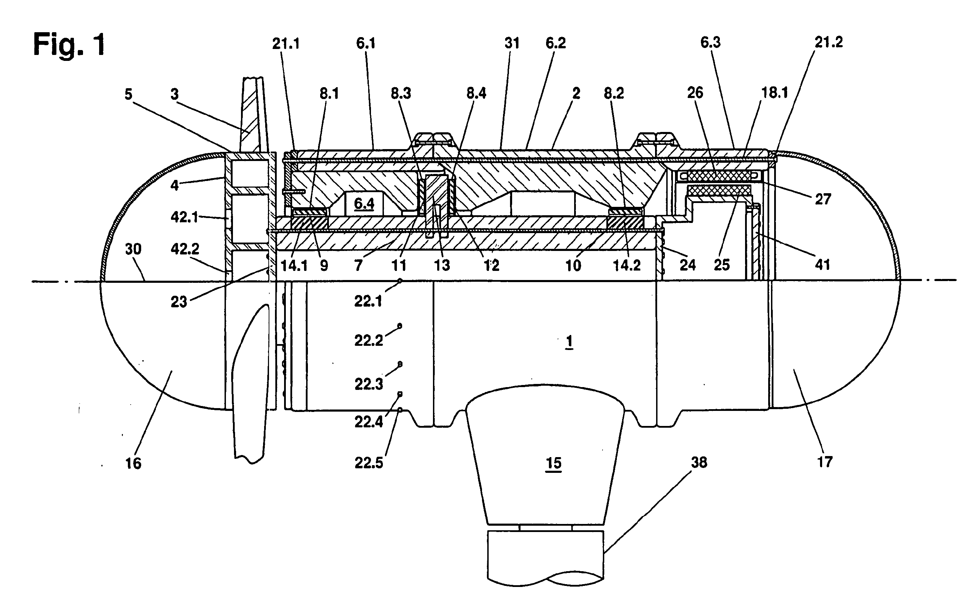

Figur 1 zeigt ein Gezeitenkraftwerk mit einer Maschinengondel 1, die ein lasttragendes Gondelgehäuse 2 umfasst. Die Wasserturbine 3, die rotorseitige Haube 16, die Nabe 5 und die daran drehstarr anschließende Turbinenwelle 7 bilden eine umlaufende Einheit 4. Dabei stützt sich die umlaufende Einheit 4 mittels einer Gleitlageranordnung auf der Innenseite des Gondelgehäuses 2 ab. Für eine alternative, im Einzelnen nicht dargestellte Ausgestaltung kann auf die Turbinenwelle 7 verzichtet werden und stattdessen eine Außerläuferanordnung mit einem sich radial außen am Gondelgehäuse 2 abstützenden Tragring für die Wasserturbine 3 vorgesehen sein.

Für das vorliegende Ausgestaltungsbeispiel umfasst die Gleitlageranordnung ein erstes Radiallager 9, ein zweites Radiallager 10, ein erstes Axiallager 11 und ein zweites Axiallager 12. Jedes der genannten Teillager weist eine Vielzahl von Lagerelementen 8.1, 8.2, 8.3, 8.4 auf, denen gegenüberliegende Gleitflächen zugeordnet sind. Dabei umfasst das erste Radiallager 9 die Gleitflächenkomponente 14.1 an der Turbinenwelle 7. Hierzu axial beabstandet ist eine weitere Gleitflächenkomponente 14.2 für das zweite Radiallager 10 angelegt. Des Weiteren gleiten die Lagerelemente 8.3 und 8.4 des ersten Axiallagers 11 und des zweiten Axiallagers 12 zu beiden Seiten einer Spurscheibe 13 ab, sodass für eine bidirektionle Anströmung an der Wasserturbine 3 Zug- und Druckkräfte in Axialrichtung, d.h. parallel zur Rotationsachse 30, aufgefangen werden können.

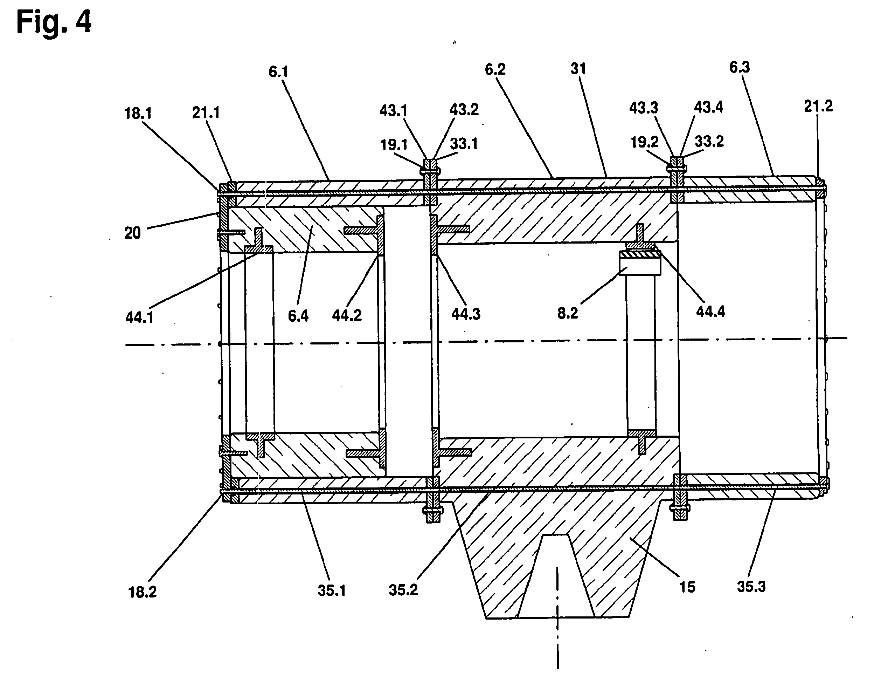

Erfindungsgemäß ist der lasttragende Teil des Gondelgehäuses 2 als Betonteil 31 ausgebildet, wobei die Lagerelemente 8.1, 8.2, 8.3 und 8.4 justierbar am Betonteil 31 befestigt sind. Für die vorliegende Ausgestaltung erfolgt die Befestigung unmittelbar am Betonteil 31. Für eine weitere, nachfolgend im Zusammenhang mit Figur 4 noch genauer erläuterte alternative Ausführung der Efindung, sind die Lagerelemente 8.1, 8.2, 8.3, 8.4 justierbar an in das Betonteil 31 eingegossenen Lagerträgern 44.1, 44.2, 44.3, 44.4 befestigt.

Für die in Figur 1 dargestellte Ausgestaltung ist das Betonteil 31 des Gondelgehäuses mehrteilig angelegt und umfasst die verspannten Betonsegmente 6.1, 6.2, 6.3, 6.4. Der Vorteil einer mehrteiligen Gestaltung ergibt sich aufgrund der großen Baugröße des Gondelgehäuses 2 aus der vereinfachten Handhabbarkeit und Nachbearbeitbarkeit der einzelnen Betonsegmente 6.1, 6.2, 6.3, 6.4. Darüber hinaus kann eine Kammerung für die Spurscheibe 13 realisiert werden, was nachfolgend anhand derFiguren 2a - c erläutert wird. Des Weiteren ist für die in Figur 1 dargestellte bevorzugte Ausgestaltung der Turmadapter 15, mit dem die Maschinengondel 1 an einer Stützstruktur 38 befestigt ist, ebenfalls als Betonteil ausgebildet. Besonders vorteilhaft ist der Turmadapter 15 Teil des Betonsegments 6.2 für das Gondelgehäuse 2.

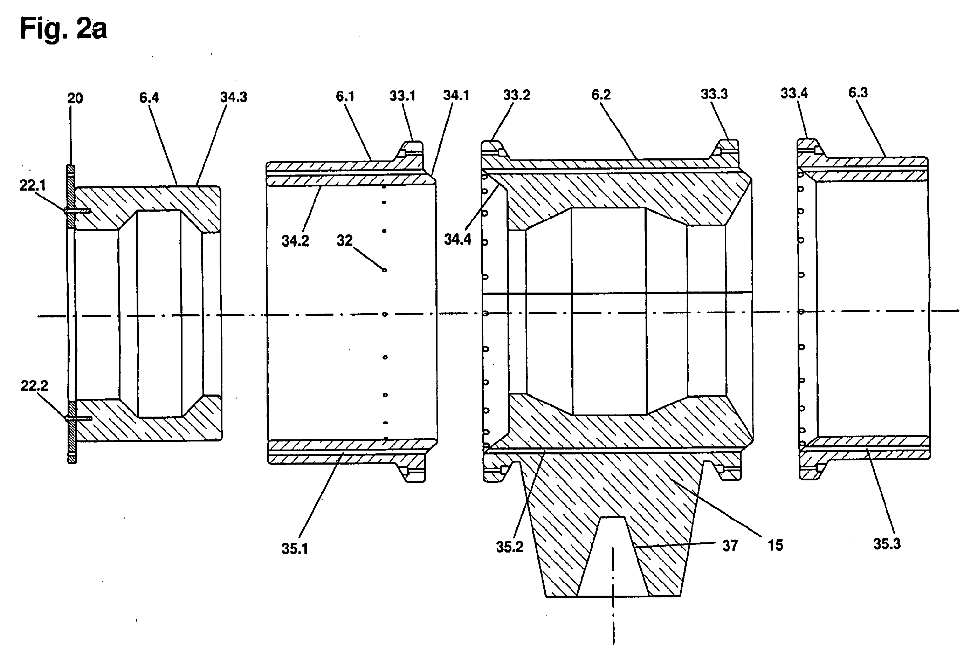

Figur 2a zeigt die einzelnen Betonsegmente 6.1, 6.2, 6.3, 6.4, aus denen das Gondelgehäuse für die in Figur 1 gezeigte Ausgestaltung gebildet wird, im Vormontagezustand. Dabei stellt das Betonsegment 6.2 das Mittelstück dar, an dem sich der Turmadapter 15 mit der Kopplungsvorrichtung 37 einteilig anschließt. Die jeweils axial benachbarten Betonsegmente 6.1, 6.1, 6.3 weisen formschlüssig ineinandergreifende Kontaktflächen auf. Hierzu sind exemplarisch die Kontaktflächen 34.1 und 34.4 im Bereich der Bünde 33.1, 33.2 an den Betonsegmenten 6.1, 6.2 bezeichnet. Außerdem kann ein im Einzelnen nicht dargestelltes, elastisches Element zwischen aneinandergrenzenden Kontaktflächen 34.1, 34.4 vorgesehen sein, das Unebenheiten ausgleicht. Des Weiteren fluchten die Zugstangen-Kanalabschnitte 35.1, 35.2, 35.3 der aneinander anschließenden Betonsegmente 6.1, 6.2, 6.3. Für eine weitere, bevorzugte Ausgestaltung werden zur Verbindung der Betonsegmente 6.1, 6.2, 6.3 entweder die an den Bünden 33.1, 33.2, 33.3, 33.4 ausgebildeten Flanschverbindungen oder die Zugstangen 18.1, 18.2 verwendet. Dies ist im Einzelnen nicht in den Figuren dargestellt.

Zusätzlich ist ein Betonsegment 6.4 vorgesehen, das zur Ausbildung einer Spurscheibenkammerung in das Betonsegment 6.1 koaxial eingeführt wird. Entsprechend sind die radial innenliegende Kontaktfläche 34.2 am Betonsegment 6.1 und die radial außen liegende Kontaktfläche 34.3 am Betonsegment 6.4 für einen Anlagekontakt im montierten Zustand dimensioniert. Dabei ist eine nicht näher dargestellte Weitergestaltung mit einem zwischenliegenden Element denkbar, die zum einen das Einführen des Betonsegments 6.4 in das Betonsegment 6.1 erleichtert und zum anderen Formunregelmäßigkeiten der Kontaktflächen 34.2, 34.3 durch ein gewisses Maß an elastischer Verformbarkeit ausgleicht.

Zusätzlich zum Formschluss erfolgt eine kraft- und reibschlüssige Verbindung zwischen den Betonteilen 6.1 und 6.4 mittels der in Figur 1 skizzierten Befestigungselemente 22.1 - 22.5, die durch das Betonsegment 6.1 von radial außen bis zum Betonsegment 6.4 reichen. Zu diesem Zweck sind Bohrungen im Betonsegment 6.1 vorgesehen. Exemplarisch ist eine dieser Bohrungen mit dem Bezugszeichen 32 bezeichnet.

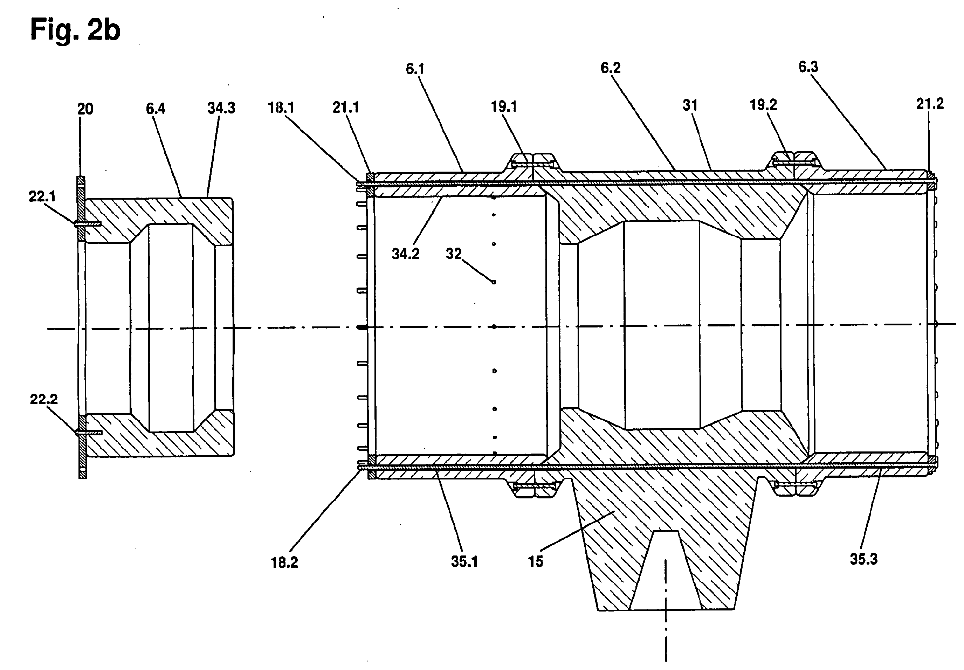

In einem ersten Montageschritt, der in Figur 2b gezeigt ist, erfolgt zunächst die Verbindung der Betonsegmente 6.1, 6.2, 6.3, die die Grundkontur des Gondelgehäuses 2 festlegen. Dabei sind für das vorliegende Ausführungsbeispiel neben den Bundbefestigungen 19.1, 19.2 zusätzlich Zugstangen 18.1, 18.2 vorgesehen. Letztere verspannen die drei Betonsegmente 6.1, 6.2, 6.3 zwischen den beiden Deckringen 21.1, 21.2 an den axialen Endflächen der Betonsegmente 6.1, 6.3. Ferner ist ersichtlich, dass die Zugstangen 18.1, 18.2 am Betonsegment 6.1 in axialer Richtung über den Deckring 21.1 etwas hinausstehen, sodass daran der über die Befestigungselemente 22.1, 22.2 mit dem Betonsegment 6.4 verbundene Ringflansch 20 gehaltert werden kann.

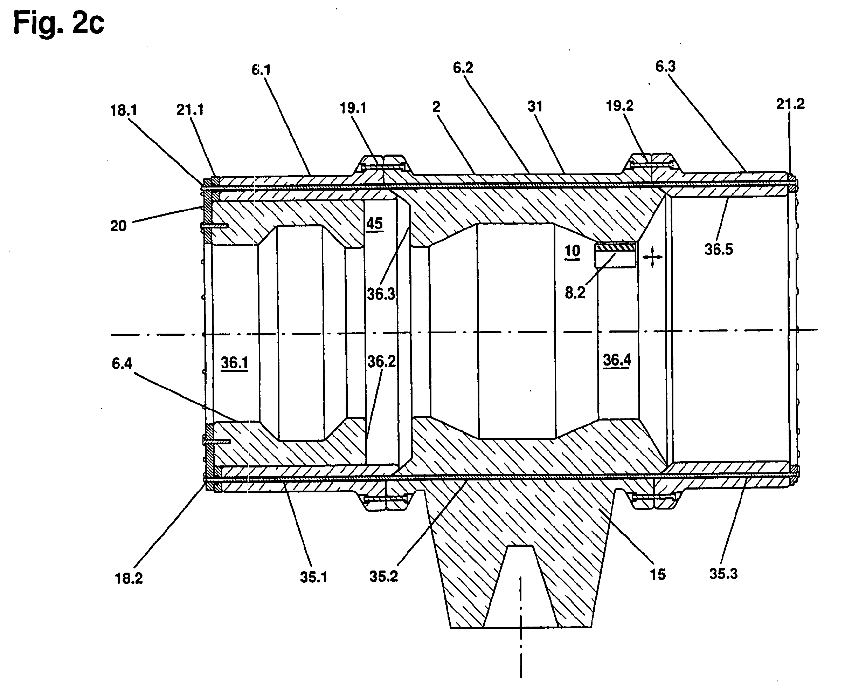

Für das erfindungsgemäße Verfahren erfolgt ein Vermessen der Lagerstützungspunkte für die Gleitlageranordnung nach der Erstellung des lasttragenden Betonteils 31 für das Gondelgehäuse. Für das vorliegende Ausgestaltungsbeispiel kann die Vermessung nach dem Zusammenfügen und Verspannen der mehrteiligen Struktur des Betonteils (31) erfolgen. Dieser Zustand ist in Figur 2c skizziert. Im Vergleich zu Figur 2b ist zusätzlich das Betonsegment 6.4 an den bereits verspannten Betonsegmenten 6.1, 6.2, 6.3 befestigt, sodass eine innenliegende Ringnut 45 für die Spurscheibe 13 entsteht. Hierzu wird bevorzugt, ausgehend von dem sich nach der Verspannung der Betonsegmente 6.1, 6.2, 6.3 ergebenden Messdaten, eine anlagenspezifische Nachbearbeitung der Kontaktflächen 34.2, 34.3 an den Betonsegmenten 6.1 und 6.4 vorgenommen.

Des Weiteren werden die Lagerabstützungspunkte 36.1, 36.2, 36.3, 36.4 bezüglich ihrer Relativlage vermessen und gegebenenfalls nachgearbeitet. Zu diesem Zweck kann es notwendig sein, das Gondelgehäuse 2 wieder in Einzelsegmente zu zerlegen, wobei im Allgemeinen nach dem erneuten Verspannen ein weiterer Vermessungsschritt erfolgen muss. Nachfolgend kann an den Lagerabstützungspunkten 36.1, 36.2, 36.3, 36.4 die Befestigung und Einrichtung der justierbaren Lagerelemente 8.1, 8.2, 8.3 vorgenommen werden. Exemplarisch ist hierzu das Lagerelement 8.2 am Lagerabstützungspunkt 36.4, der dem zweiten Radiallager 10 zugeordnet ist, dargestellt.

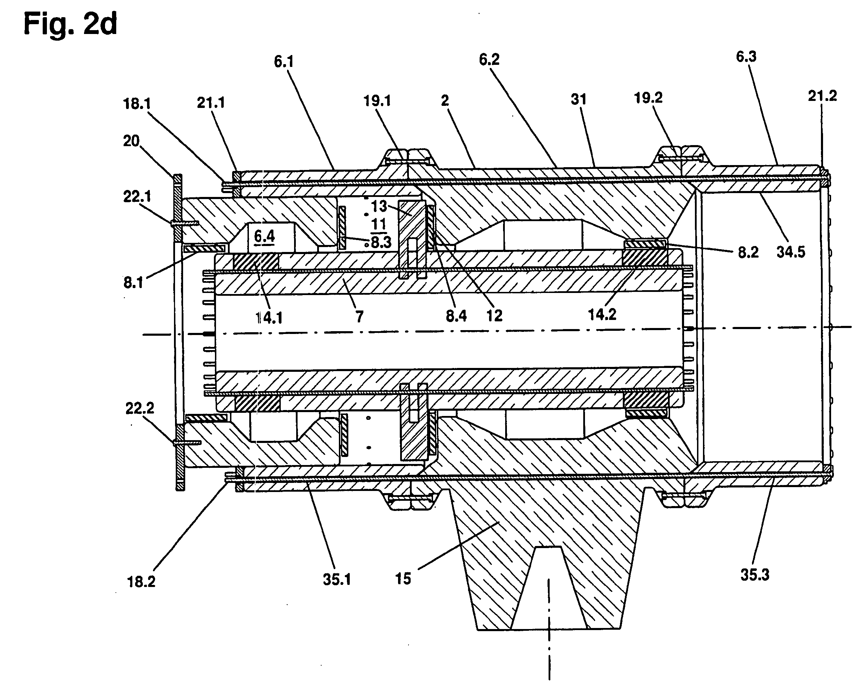

Figur 2d zeigt einen weiteren Montageschritt, bei dem die Turbinenwelle 7 in das Gondelgehäuse 2 eingeführt wird. Da die Turbinenwelle 7 für die dargestellte Ausgestaltung eine Spurscheibe 13 aufweist, besteht die Notwendigkeit vor der Einführung der Turbinenwelle 7 das koaxial innenliegende Betonsegment 6.4 nochmals zu entfernen. Dabei werden die Verspannung der anderen Betonsegmente 6.1, 6.2, 6.3 über die Zugstangen 18.1, 18.2 zwischen den Deckringen 21.1, 21.2 sowie die Bundbefestigungen 19.1, 19.2 beibehalten. In Figur 2d ist das erneute Einführen des Betonsegments 6.4 gezeigt, wobei das Lagersegment 8.3 des ersten Axiallagers 11 zur einen Seite gegen die Spurscheibe 13 geführt wird, die bereits an der gegenüberliegenden Seite am Lagerelement 8.4 des zweiten Axiallagers 12 anliegt.

In einem nachfolgenden, im Einzelnen nicht gezeigten Montageschritt erfolgt der Aufbau des Generatorstators 26 am Betonsegment 6.3 auf der Grundlage der Vermessung der Kontaktfläche 34.5, die optional nachgearbeitet ist. Alternativ kann der elektrische Generator als Ganzes in Form einer vormontierten Einheit in das Betonsegment 6.3 eingeführt und an dessen Innenwandung befestigt werden.

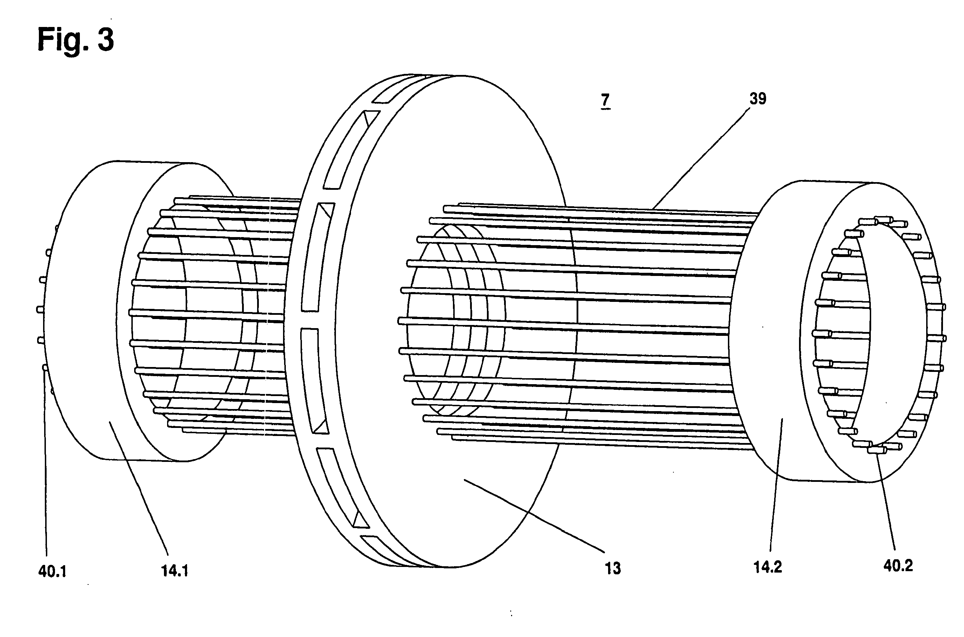

Für eine besonders bevorzugte Ausführung der Erfindung ist zusätzlich zum Gondelgehäuse 2 die Turbinenwelle 7 als Betonteil ausgeführt. Für eine vorteilhafte, in Figur 3 skizzierte Ausführung werden die präzise zueinander positionierten Komponenten, insbesondere die Gleitflächenkomponenten 14.1, 14.2, des ersten Radiallagers 9 und des zweiten Radiallagers 10 sowie die Spurscheibe 13 über ein Stahlskelett 39 verbunden, das einen Teil der Armierung bildet, und in einem nachfolgenden Herstellungsschritt mit Beton umgossen. Besonders bevorzugt stehen die Endstücke 40.1, 40.2 des Stahlskeletts 39 an den beiden axialen Stirnflächen über die Turbinenwelle 7 hinaus. Die einzelnen Komponenten der Endstücke 40.1, 40.2 sind mit Gewinden versehen, sodass, wie in Figur 1 dargestellt, ein turbinenseitiges Anschlussstück 23, vorliegend eine der Turbinenwelle 7 zugewandte Axialfläche der Nabe 5, und ein generatorseitiges Anschlussstück 24, das als Träger für den Generatorläufer 25 dient, aufgesetzt und verschraubt werden können. Bevorzugt erfolgt wiederum eine anlagenspezifische Anpassung an das nach der Fertigung vorliegende Muster der Anschlusselemente an den Endstücken 40.1, 40.2. Zur Montage erfolgt ein Eingriff über die Zugangsöffnungen 42.1, 42.2 am generatorseitigen Anschlussstück 24 mit einem nachfolgenden Aufsetzen der rotorseitigen Haube 16. Entsprechend kann das individuell angepasste generatorseitige Anschlussstück 24 durch eine Zugangsöffnung erreicht werden, die nach der Montage mit dem in Figur 1 gezeigten Deckel 41 verschlossen wird. Abschließend wird die generatorseitige Haube 17 aufgesetzt.

Im Endmontagezustand ist bevorzugt der Innenbereich der Turbinenwelle 7 wasserdicht gekapselt, sodass die Turbinenwelle 7 zur Entlastung der Gleitlageranordnung schwimmfähig angelegt ist. Die hierfür insbesondere im Bereich des turbinenseitigen Anschlussstücks 23 und des generatorseitigen Anschlussstücks 24 vorgesehenen Dichtungselemente sind im Einzelnen nicht in den Figuren dargestellt.

Aus Figur 4 geht eine Gestaltungsalternative für ein erfindungsgemäßes Gondelgehäuse hervor. In Abweichung zum bisher dargestellten Ausführungsbeispiel werden die Bünde 33.1, 33.2 durch im jeweiligen Betonsegment 6.1, 6.2, 6.3, 6.4 eingegossene Flanschelemente 43.1, 43.2, 43.3, 43.4 gebildet, die vorzugsweise als Stahlringe ausgeführt sind. Außerdem liegen Lagerträger 44.1, 44.2, 44.3, 44.4 vor, die ebenfalls bevorzugt aus einem korrosionsbeständigen Stahl hergestellt sind. Diese sind in die Betonsegmente 6.2 und 6.4 eingegossen und werden für das erfindungsgemäße Verfahren nach dem Herstellen des Betonteils vermessen und gegebenenfalls nachbearbeitet. Der Vorteil eingegossener Lagerträger 44.1, 44.2, 44.3, 44.4 besteht in der Vereinfachung des Nachbearbeitungsschritts in Verbindung mit einer höheren Bearbeitungsgüte. Außerdem können die punktuellen Belastungen an den Befestigungsstellen der Lagerelemente 8.1, 8.2, 8.3, 8.4 besser abgefangen werden.

Weitere Gestaltungen der Erfindung sind denkbar, dabei können insbesondere Teile des Gondelgehäuses 2 aus Nichtbetonteilen hergestellt sein, sodass insgesamt ein lasttragendes Betonverbundteil entsteht. Weitere Ausgestaltungen der Erfindung ergeben sich aus den nachfolgenden Schutzansprüchen.

**Bezugszeichenliste**

| | |
|---|---|
| 1 | Maschinengondel |
| 2 | Gondelgehäuse |
| 3 | Wasserturbine |
| 4 | umlaufende Einheit |
| 5 | Nabe |
| 6.1, 6.2, 6.3, 6.4 | Betonsegment |
| 7 | Turbinenwelle |
| 8.1, 8.2, 8.3, 8.4 | Lagerelemente |
| 9 | erstes Radiallager |
| 10 | zweites Radiallager |
| 11 | erstes Axiallager |
| 12 | zweites Axiallager |
| 13 | Spurscheibe |
| 14.1, 14.2 | Gleitflächenkomponente |
| 15 | Turmadapter |
| 16 | rotorseitige Haube |
| 17 | generatorseitige Haube |
| 18.1, 18.2 | Zugstange |
| 19.1, 19.2 | Bundbefestigung |
| 20 | Ringflansch |
| 21.1, 21.2, | Deckring |
| 22.1, 22.2, 22.3, 22.4, 22.5 | Befestigungselement |
| 23 | turbinenseitiges Anschlussstück |
| 24 | generatorseitiges Anschlussstück |
| 25 | Generatorläufer |
| 26 | Generatorstator |
| 27 | Spaltrohr |
| 28.1, 28.2, 28.3 | eingegossener Lagerträger |
| 30 | Rotationsachse |
| 31 | Betonteil |
| 32 | Bohrung |
| 33.1, 33.2 | Bund |
| 34.1, 34.2, 34.3, 34.4, 34.5 | Kontaktfläche |
| 35.1, 35.2, 35.3 | Zugstangen-Kanalabschnitt |
| 36.1,36.2, 36.3, 36.4 | Lagerabstützungspunkt |
| 37 | Kopplungsvorrichtung |
| 38 | Stützstruktur |
| 39 | Stahlskelett |
| 40.1, 40.2 | Endstück |
| 41 | Deckel |
| 42.1, 42.2 | Zugangsöffnungen |
| 43.1, 43.2, 43.3,43.4 | Flanschelement |
| 44.1, 44.2, | |
| 44.3, 44.4 | Lagerträger |
| 45 | Ringnut |

## Patentansprüche

1. Gezeitenkraftwerk umfassend
1.1 eine Maschinengondel (1) mit einem Gondelgehäuse (2);
1.2 eine Wasserturbine (3), die Teil einer umlaufenden Einheit (4) ist, wobei sich die umlaufende Einheit (4) mittels einer Gleitlageranordnung, die eine Vielzahl von Lagerelementen (8.1, 8.2, 8.3, 8.4) umfasst, am Gondelgehäuse (2) abstützt;
**dadurch gekennzeichnet, dass**
1.3 das Gondelgehäuses (2) wenigstens ein lasttragendes Betonteil (31) umfasst und die Lagerelemente (8.1, 8.2, 8.3, 8.4) justierbar am Betonteil (31) oder an einem in das Betonteil (31) eingegossenen Lagerträger (44.1, 44.2, 44.3, 44.4) befestigt sind.

2. Gezeitenkraftwerk nach Anspruch 1, **dadurch gekennzeichnet, dass** das Betonteil (31) in einem Bereich, an dem die Lagerelemente (44.1, 44.2, 44.3, 44.4) befestigt sind, nachbearbeitet ist.

3. Gezeitenkraftwerk nach einem der Ansprüche 1 oder 2, **dadurch gekennzeichnet, dass** der Lagerträger (44.1, 44.2, 44.3, 44.4) aus einem in einer Seewasserumgebung korrosionsbeständigen Werkstoff besteht.

4. Gezeitenkraftwerk nach einem der vorausgehenden Ansprüche, **dadurch gekennzeichnet, dass** das Betonteil (31) mehrere Betonsegmente (6.1, 6.2, 6.3, 6.4) umfasst, die gegeneinander verspannt sind.

5. Gezeitenkraftwerk nach Anspruch 4, **dadurch gekennzeichnet, dass** zur Verspannung der Betonsegmente (6.1, 6.2, 6.3, 6.4) dienende Zugstangen (18.1, 18.2) in wasserdicht gekapselten Zugstangen-Kanalabschnitten (35.1, 35.2, 35.3, 35.4) im Inneren der Betonsegmente (6.1, 6.2, 6.3, 6.4) verlaufen und/oder eine Korrosionsschutzbeschichtung tragen und/oder aus einem korrosionsbeständigen Material bestehen.

6. Gezeitenkraftwerk nach einem der vorausgehenden Ansprüche, **dadurch gekennzeichnet, dass** das Gondelgehäuse (2) eine innenliegende Ringnut (45) umfasst, die durch koaxial angeordnete ringförmige Betonsegmente (6.1, 6.4) und/oder mehrere Begrenzungselemente gebildet wird, die an der Innenwandung am betonierten Gondelgehäuse oder an einbetonierten Trägern befestigt sind.

7. Gezeitenkraftwerk nach einem der Ansprüche 4 - 6, **dadurch gekennzeichnet, dass** wenigstens zwei Betonsegmente (6.1, 6.2, 6.3, 6.4) eingegossene Flanschelemente (43.1, 43.2, 43.3, 43.4) zur wechselseitigen Befestigung umfassen.

8. Gezeitenkraftwerk nach einem der vorausgehenden Ansprüche, **dadurch gekennzeichnet, dass** die Lageranordnung ein erstes Radiallager (9) an einem ersten Betonsegment (6.4) und ein zweites Radiallager (10) an einem zweiten Betonsegment (6.3) umfasst, wobei das erste Betonsegment (6.4) und das zweite Betonsegment (6.3) wenigstens mittelbar gegeneinander verspannt sind.

9. Gezeitenkraftwerk nach einem der vorausgehenden Ansprüche, **dadurch gekennzeichnet, dass** das Betonteil (31) aus seewasserfesten Beton besteht.

10. Gezeitenkraftwerk nach einem der vorausgehenden Ansprüche, **dadurch gekennzeichnet, dass** das Betonteil (31) Faserbeton umfasst.

11. Gezeitenkraftwerk nach einem der vorausgehenden Ansprüche, ferner umfassend eine Turbinenwelle (7) als Teil der umlaufenden Einheit (4), die als Betonteil ausgebildet ist.

12. Gezeitenkraftwerk nach Anspruch 11, **dadurch gekennzeichnet, dass** die Turbinenwelle (7) Gleitflächenkomponenten (14.1, 14.2) umfasst, die in das Betonteil (31) eingegossen sind.

13. Gezeitenkraftwerk nach Anspruch 12, **dadurch gekennzeichnet, dass** die Gleitflächenkomponenten (14.1, 14.2) mittels eines Stahlskeletts (39) miteinander verbunden sind, das ein Teil der Armierung der betonierten Turbinenwelle (7) bildet.

14. Gezeitenkraftwerk nach einem der Ansprüche 11 - 13, **dadurch gekennzeichnet, dass** die Turbinenwelle (7) gegen das Eindringen von Wasser abgedichtet ist und einen schwimmfähigen Teil der umlaufenden Einheit (4) bildet.

15. Gezeitenkraftwerk nach einem der Ansprüche 11 - 14, ferner umfassend ein turbinenseitiges Anschlussstück (23) und/oder ein generatorseitiges Anschlussstück (24), die auf die im einzelnen Gezeitenkraftwerk vorliegende Turbinenwelle (7) anlagenspezifisch angepasst sind.

16. Verfahren zur Herstellung eines Gondelgehäuses (2) eines Gezeitenkraftwerks, an dem sich eine umlaufende Einheit (4) mit einer Wasserturbine (3) mittels einer Gleitlageranordnung, die eine Vielzahl von Lagerelementen (8.1, 8.2, 8.3, 8.4) umfasst, abstützt;
**gekennzeichnet durch** die folgenden Verfahrensschritte:
16.1 Herstellung des lasttragenden Teils des Gondelgehäuses (2) als Betonteil (31);
16.2 Vermessen von Lagerabstützungspunkten (36.1, 36.2, 36.3, 36.4) für die Lagerelemente (8.1, 8.2, 8.3, 8.4) am Betonteil (31) und/oder an wenigstens einem in das Betonteil (31) eingegossenen Lagerträger (44.1, 44.2, 44.3, 44.4);
16.3 Befestigung und Einrichtung justierbarer Lagerelemente (8.1, 8.2, 8.3, 8.4) an den Lagerabstützungspunkten (36.1, 36.2, 36.3, 36.4).

## Claims

1. A tidal power plant, comprising
1.1 a machine nacelle (1) with a nacelle housing (2);
1.2 a water turbine (3) which is part of a revolving unit (4), with the revolving unit (4) resting on the nacelle housing (2) by means of a sliding bearing arrangement comprising a plurality of bearing elements (8.1, 8.2, 8.3, 8.4); **characterized in that**
1.3 the nacelle housing (2) comprises at least one load-bearing concrete part (31) and the bearing elements (8.1, 8.2, 8.3, 8.4) are adjustably fastened to the concrete part (31) or to a bearing support (44.1, 44.2, 44.3, 44.4) cast into the concrete part (31).

2. A tidal power plant according to claim 1, **characterized in that** the concrete part (31) is reworked in a region to which the bearing elements (44.1, 44.2, 44.3, 44.4) have been fastened.

3. A tidal power plant according to one of the claims 1 or 2, **characterized in that** the bearing support (44.1, 44.2, 44.3, 44.4) consists of a material which is corrosion-proof in a seawater environment.

4. A tidal power plant according to one of the preceding claims, **characterized in that** the concrete part (31) comprises several concrete segments (6.1, 6.2, 6.3, 6.4).

5. A tidal power plant according to claim 4, **characterized in that** tension rods (18.1, 18.2) which are used for tensioning the concrete segments (6.1, 6.2, 6.3, 6.4) extend in water-proof encapsulated tension-rod channel sections (35.1, 35.2, 35.3, 35.4) in the interior of the concrete segments (6.1, 6.2, 6.3, 6.4) and/or carry an anti-corrosion coating and/or consist of a corrosion-proof material.

6. A tidal power plant according to one of the preceding claims, **characterized in that** the nacelle housing (2) comprises an inwardly disposed annular groove (45) which is formed by coaxially arranged annular concrete segments (6.1, 6.4) and/or several boundary elements which are fastened on the inside wall to the concreted nacelle housing or to cast supports.

7. A tidal power plant according to one of the claims 4 to 6, **characterized in that** at least two concrete segments (6.1, 6.2, 6.3, 6.4) comprise cast flange elements (43.1, 43.2, 43.3, 43.4) for mutual fastening.

8. A tidal power plant according to one of the preceding claims, **characterized in that** the bearing arrangement comprises a first radial bearing (9) on a first concrete segment (6.4) and a second radial bearing (10) on a second concrete segment (6.3), with the first concrete segment (6.4) and the second concrete segment (6.3) being tensioned at least indirectly against one another.

9. A tidal power plant according to one of the preceding claims, **characterized in that** the concrete part (31) consists of seawater-proof concrete.

10. A tidal power plant according to one of the preceding claims, **characterized in that** the concrete part (31) comprises fiber concrete.

11. A tidal power plant according to one of the preceding claims, further comprising a turbine shaft (7) as a part of the revolving unit (4) which is arranged as a concrete part.

12. A tidal power plant according to claim 11, **characterized in that** the turbine shaft (7) comprises sliding area components (14.1, 14.2) which are cast into the concrete part (31).

13. A tidal power plant according to claim 12, **characterized in that** the sliding area components (14.1, 14.2) are connected with one another by means of a steel frame (39) which forms a part of the armoring of the concreted turbine shaft (7).

14. A tidal power plant according to one of the claims 11 to 13, **characterized in that** the turbine shaft (7) is sealed against the penetration of water and forms a floatable part of the revolving unit (4).

15. A tidal power plant according to one of the claims 11 to 14, further comprising a connection piece (23) on the turbine side and/or a connection piece (24) on the generator side, which are adjusted in a customized manner to the turbine shaft (7) present in the individual tidal power plant.

16. A method for producing a nacelle housing (2) of a tidal power plant, on which rests a revolving unit (4) with a water turbine (3) by means of a sliding bearing arrangement comprising a plurality of bearing elements (8.1, 8.2, 8.3, 8.4), **characterized by** the following method steps:
16.1 production of the load-bearing part of the nacelle housing (2) as a concrete part (31);
16.2 measuring bearing support points (36.1, 36.2, 36.3, 36.4) for the bearing elements (8.1, 8.2, 8.3, 8.4) on the concrete part (31) and/or on at least one bearing support (44.1, 44.2, 44.3, 44.4) cast into the concrete part;
16.3 fixing and setup of adjustable bearing elements (8.1, 8.2, 8.3, 8.4) on the bearing support points (36.1, 36.2, 36.3, 36.4).

## Revendications

1. Centrale marémotrice comprenant
1.1 une nacelle de machine (1) ayant une carcasse de nacelle (2);
1.2 une turbine à eau (3), faisant partie d'une unité rotative (4), où l'unité rotative (4) s'appuie contre la carcasse de nacelle (2) au moyen d'un montage de palier antifriction comprenant une pluralité d'éléments de palier (8.1, 8.2, 8.3, 8.4);
**caractérisée en ce que** :
1.3 la carcasse de nacelle (2) comporte au moins une partie béton porteuse de charge (31) et les éléments de palier (8.1, 8.2, 8.3, 8.4) sont fixés de manière réglable contre la partie béton (31) ou un support de palier (44.1, 44.2, 44.3, 44.4) coulé dans la partie béton (31).

2. Centrale marémotrice selon la revendication 1, **caractérisée en ce que** la partie béton (31) est rectifiée dans une zone au niveau de laquelle les éléments de palier (44.1, 44.2, 44.3, 44.4) sont fixés.

3. Centrale marée motrice selon l'une quelconque des revendications 1 ou 2, **caractérisée en ce que** le support de palier (44.1, 44.2, 44.3, 44.4) se compose d'un matériau résistant à la corrosion dans un environnement d'eau de mer.

4. Centrale marée motrice selon l'une quelconque des revendications précédentes, **caractérisée en ce que** la partie béton (31) comprend plusieurs segments de béton (6.1, 6.2, 6.3, 6.4) qui sont appliqués l'un contre l'autre par serrage.

5. Centrale marémotrice selon la revendication 4, **caractérisée en ce que** des barres d'accouplement (18.1, 18.2) servant à la mise sous contrainte des segments de béton (6.1, 6.2, 6.3, 6.4) s'étendent dans des parties de conduit de barres d'accouplement (35.1, 35.2, 35.3, 35.4) encapsulées de manière étanche à l'eau à l'intérieur des segments de béton (6.1, 6.2, 6.3, 6.4) et/ou portent une couche de protection contre la corrosion et/ou se composent d'un matériau résistant à la corrosion.

6. Centrale marée motrice selon l'une quelconque des revendications précédentes, **caractérisée en ce que** la carcasse de nacelle (2) comprend une gorge annulaire interne (45), qui est constituée de segments de béton (6.1, 6.4) annulaires disposés coaxialement et/ou de plusieurs éléments de délimitation, qui sont fixés au niveau de la paroi interne contre la carcasse de nacelle bétonnée ou bien contre des supports noyés dans le béton.

7. Centrale marée motrice selon l'une quelconque des revendications 4 à 6, **caractérisée en ce qu'**au moins deux segments de béton (6.1, 6.2, 6.3, 6.4) comportent des éléments de bride coulés (43.1, 43.2, 43.3, 43.4) pour assurer leur fixation mutuelle.

8. Centrale marée motrice selon l'une quelconque des revendications précédentes, **caractérisée en ce que** le montage de palier comprend un premier palier radial (9) au niveau d'un premier segment de béton (6.4) et un second palier radial (10) au niveau d'un deuxième segment de béton (6.3), où le premier segment de béton (6.4) et le deuxième segment de béton (6.3) sont appliqués l'un contre l'autre par serrage au moins indirectement.

9. Centrale marée motrice selon l'une quelconque des revendications précédentes, **caractérisée en ce que** la partie béton (31) se compose de béton résistant à l'eau de mer.

10. Centrale marée motrice selon l'une quelconque des revendications précédentes, **caractérisée en ce que** la partie béton (31) comprend du béton fibreux.

11. Centrale marée motrice selon l'une quelconque des revendications précédentes, comprenant de plus un arbre de turbine (7) comme partie intégrante de l'unité rotative (4), qui est conçu comme une partie béton.

12. Centrale marémotrice selon la revendication 11, **caractérisée en ce que** l'arbre de turbine (7) comprend des composants de surfaces antifriction (14.1, 14.2) qui sont coulés dans la partie béton (31).

13. Centrale marémotrice selon la revendication 12, **caractérisé en ce que** les composants de surfaces antifriction (14.1, 14.2) sont reliés entre eux à l'aide d'un squelette d'acier (39), qui forme une partie de l'armature de l'arbre de turbine bétonné (7).

14. Centrale marée motrice selon l'une quelconque des revendications 11 à 13, **caractérisée en ce que** l'arbre de turbine (7) est étanche à la pénétration d'eau et constitue une partie flottante de l'unité rotative (4).

15. Centrale marée motrice selon l'une quelconque des revendications 11 à 14, comportant également une pièce de raccordement côté turbine (23) et/ou une pièce de raccordement côté générateur (24), qui sont adaptées à l'arbre de turbine (7) présent dans la centrale marémotrice particulière, spécialement pour l'installation.

16. Procédé de fabrication d'une carcasse de nacelle (2) d'une centrale marémotrice, contre laquelle s'appuie une unité rotative (4) pourvue d'une turbine à eau (3) au moyen d'un montage de palier antifriction comprenant une pluralité d'éléments de palier (3, 8.1, 8.2, 8.3, 8.4);
**caractérisée par** les phases de procédé suivantes:
16.1 Fabrication de la partie porteuse de charge de la carcasse de nacelle (2) comme partie béton (31);
16.2 Dimensionnement de points d'appui de palier (36.1, 36.2, 36.3, 36.4) pour les éléments de palier (8.1, 8.2, 8.3, 8.4) au niveau de la partie béton (31) et/ou contre au moins un support de palier (44.1, 44.2, 44.3, 44.4) coulé dans la partie béton (31);
16.3 Fixation et mise en place des éléments de palier réglables (8.1, 8.2, 8.3, 8.4) au niveau des points d'appui de palier (36.1, 36.2, 36.3, 36.4).
